Europäisches Patentamt

European Patent Office

Office européen des brevets

(19)

(11) EP 1 576 895 A1

(12) **EUROPEAN PATENT APPLICATION**
published in accordance with Art. 158(3) EPC

(43) Date of publication:
21.09.2005 Bulletin 2005/38

(21) Application number: 03771390.6

(22) Date of filing: 28.07.2003

(51) Int Cl.⁷: **A23L 1/304**, A23L 2/52,
A23C 11/00

(86) International application number:
PCT/JP2003/009555

(87) International publication number:
WO 2004/010795 (05.02.2004 Gazette 2004/06)

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **31.07.2002 JP 2002223332**

(71) Applicant: **MARUO CALCIUM COMPANY LIMITED
Hyogo 674-0084 (JP)**

(72) Inventors:
• **HOJO, Hisakazu,
c/o Maruo Calcium Company Limited
Akashi-shi, Hyogo 674-0084 (JP)**
• **KUBOTA, Naoki,
c/o Maruo Calcium Companuy Limited
Akashi-shi, Hyogo 674-0084 (JP)**
• **MORISAKI, Yoshimasa,
Maruo Calcium Company Ltd.
Akashi-shi, Hyogo 674-0084 (JP)**

(74) Representative: **Vossius & Partner
Siebertstrasse 4
81675 München (DE)**

(54) **FOOD ADDITIVE COMPOSITION AND FOOD CONTAINING THE SAME**

(57)     Disclosed is a food additive composition which contains 100 parts by weight of at least one water hardly soluble inorganic compound (A) selected from the group consisting of calcium compounds and magnesium compounds having a solubility in water at 20 °C of not more than 0.1 g/100 g of water, 1 to 90 parts by weight of gum arabic (B) and 0.01 to 5 parts by weight of a chelating agent (C). The present invention provides a food composition excellent in dispersibility in liquid and flavor, and when added to foods, a food composition excellent in storage stability and flavor.

**EP 1 576 895 A1**

**Description**

Technical Field

The present invention relates to a food additive composition having an excellent dispersion stability in liquid, which is effectively utilized by adding to foods such as yogurt, cow's milk, juice, milk powder, portions for coffee or black tea, etc., to enrich calcium and/or magnesium, and a food composition containing the food additive composition.

Background Art

Recently, the shortage of ingestion of calcium is often pointed out and this phenomenon is notable in growing children and aged persons. In order to solve the shortage of calcium ingestion, calcium-enriched foods have come to be sold. Even in cow's milk which is generally said to have a high content of calcium, it has been attempted to sell a calcium-enriched cow's milk by further adding calcium. Further, other calcium-enriched products such as juice and milk powder, etc., are started to be sold.

Recently, an attention has been paid to the action of magnesium in a living body. Magnesium has the actions of relaxing and dilating muscle and blood vessel, and is an indispensable mineral to a human being. When magnesium is deficient, it is considered that a human being easily suffers from hypertension, angina pectoris and hyperlipemia. In addition, magnesium is greatly involved in calcium metabolism and, when magnesium is deficient, various symptoms accompanied with calcium metabolism abnormality are manifested. Further, it is said that magnesium is associated with many enzyme reactions, and maintains homeostasis in a living body. However, recently, since a diet life has been europeanized and Japanese people have begun to take cereals having a high polishing degree, and magnesium is considerably reduced at a stage of purifying and processing a food, there is a tendency that magnesium is deficient in a diet life of modern people, and an attention is paid to magnesium-enriched products.

For example, when in cow's milk and portions for coffee, calcium and magnesium of a water-soluble inorganic acid form or organic acid form calcium such as calcium lactate, calcium chloride and magnesium sulfate are used, those are liable to damage the stability of proteins contained in cow's milk and portions for coffee and thus they have a disadvantage that ingredients of the portion reacts with a calcium agent or magnesium agent to result in thickening and gellation and thus, it is difficult to add more than a given level to thus prevent a large amount of use as materials of calcium.

On the other hand, the water-insoluble calcium or magnesium in an inorganic form does not damage the stability of proteins contained in cow's milk and yogurt due to water-insolubility and thus it can be used in a large amount. The calcium in an inorganic form generally has, however, a high specific gravity of 2.1 or more and thus when those are dispersed in cow's milk and portions, it precipitates in a short time to undesirably lower the beauty in appearance. As a result, it has a disadvantage that it can not be used in a large amount.

Many methods for adding a large amount of calcium to foods have been heretofore proposed. For example, as a method for preparing a slurry of a calcium agent in an inorganic form which is used in cow's milk, in Japanese Patent Non-examined publication (Kokai) No. 6-127909, the present inventors propose a method for preparing a calcium carbonate suspension by wet-pulverization of a mixture of sucrose stearic acid ester having an HLB 16 and calcium carbonate under the specific conditions. Moreover, the present inventors propose in WO 98-42210 a calcium suspension comprising a mixture of a calcium agent such as calcium carbonate and calcium phosphate with gum arabic.

When these methods are used, it is possible to obtain a product with a stable quality which is difficult to precipitate in a certain period of time. However, for example, when a product obtained by those methods is added to a portion for coffee, there is no problem with respect to quality immediately after preparation, but thickening with a lapse of time, in a worse case, gellation takes place during storage and thus it has a drawback that it is not used in usages such as a portion for coffee needing a relishing period of approximately 60 to 90 days.

Although the reasons for the above are not made clear, it is presumably considered that the calcium agent and magnesium agent prepared by the above-mentioned methods are hardly soluble in water and contain a certain amount of calcium ion and magnesium ion in the system, though not so much, and that these calcium and magnesium ions gradually react with protein contained in the portion to thus generate thickening and gellation with a lapse of time.

Meanwhile, as a method for adding calcium to a powdery coffee whitener, Japanese Patent Non-examined publication (Kokai) No. 10-4877 proposes a whitener for coffee or black tea obtained by adding a crystalline cellulose to a calcium agent and/or inorganic calcium salt. This method comprises adding a crystalline cellulose to a calcium agent and/or inorganic calcium salt, further after adding a coffee whitener ingredient, spray drying to thus produce a powdery coffee whitener. In this method, since the coffee whitener is powdery, the reaction of the calcium agent with protein with a lapse of time does not take place, but a method for enriching calcium and magnesium having stable quality for a long period of time in liquid products such as a coffee portion has never been proposed yet.

In light of the foregoing situation, the present invention is to provide a food additive composition not only excellent in circulation economy, but giving favorable properties to foods such as cow's milk and yogurt, especially portions for coffee or black tea, and a food composition containing it.

Disclosure of the Invention

The present invention encompasses, in a first aspect, a food additive composition which contains 100 parts by weight of at least one water hardly soluble inorganic compound (A) selected from the group consisting of calcium compounds and magnesium compounds having a solubility in water at 20°C of not more than 0.1 g/100 g of water, 1 to 90 parts by weight of gum arabic (B) and 0.01 to 5 parts by weight of a chelating agent (C).

The present invention encompasses, in a second aspect, a food additive composition which contains 100 parts by weight of a water hardly soluble inorganic compound (A), 1 to 90 parts by weight of gum arabic (B), 0.01 to 5 parts by weight of a chelating agent (C) and 1 to 90 parts by weight of at least one additive (D) selected from the group consisting of emulsifiers, thickening stabilizers, modified starches, soybean polysaccharides and oligosaccharides, wherein an content of said component (B) is not less than 20 % by weight of the total amount of the components (B) and (D).

The present invention encompasses, in a third aspect, a food composition containing the foregoing food additive composition.

Best Modes for Carrying out the Invention

The water hardly soluble inorganic compound is a water hardly soluble inorganic compound having a solubility in water at 20°C of not more than 0.1 g/100 g of water and as the preferable examples, calcium carbonate, calcium phosphate, magnesium carbonate, magnesium phosphate and dolomite be exemplified. If the solubility in water at 20°C is more than 0.1 g/100 g of water, the amount of calcium ion and magnesium ion in the prepared product tends to be large and thus these ions are liable to react with a milk protein. As a result, thickening and degradation in taste tend to occur.

The calcium carbonate, one of calcium compounds used in the present invention may include, for example, coral calcium carbonate containing calcium carbonate of 50 % by weight or more, heavy calcium carbonate and synthetic calcium carbonate. Among these, the synthetic calcium carbonate prepared by chemical synthetic processes represented by a carbon dioxide process in which milk of lime being an aqueous suspension of calcium hydroxide is reacted with carbon dioxide gas is preferable, since a fine dispersion is easy to be obtained. As a preferable method for preparing a synthetic calcium carbonate by the carbon dioxide process, the following method is exemplified:

That is, the carbonation reaction is conducted between lime of milk and carbon dioxide gas and an aqueous suspension of the calcium carbonate is obtained. In this case, calcium carbonate is prepared by stirring and/or wet-pulverizing and/or still standing an aqueous suspension of the pH Q containing calcium carbonate after completion of the carbonation reaction to thus raise the pH of the aqueous suspension to the pH R satisfying the equations (c) and (d), thereafter, adjusting the pH of the aqueous suspension to the pH S satisfying the equation (e) by removing alkali substances or lowering the concentration per volume of alkali substances:

$$R \geqq 8.6 \tag{c}$$

$$10^{(R + 2)} / 10^{Q} \geqq 125 \tag{d}$$

$$10^{(S + 2)} / 10^{R} \leqq 80 \tag{e}$$

wherein Q and R mean a pH under the same temperature, respectively. With respect to the pH S, when S is less than 8.6, calculation is made as 8.6.

The calcium phosphate, one of calcium compounds used in the present invention stands for inorganic substances comprising calcium salts of phosphoric acid, and may include natural calcium phosphates containing calcium phosphate of 50 % by weight or more, cow's born and synthetic calcium phosphate. Among these, synthetic calcium phosphate prepared by a chemical synthetic process in which a calcium salt such as calcium hydroxide, calcium carbonate and calcium chloride and a phosphoric acid compound such as phosphoric acid and a phosphoric acid salt such as sodium phosphate are allowed to be reacted is preferable. Among these synthetic calcium phosphates, at least one calcium phosphate selected from calcium dihydrogenpyrophosphate, calcium monohydrogenphosphate and calcium tertiary phosphate is more preferable.

As to the form of calcium carbonate and/or calcium phosphate (hereinafter referred to as "calcium agent") used as materials in the present invention, an aqueous suspension of the calcium agent prepared by a normal method or an aqueous suspension obtained by adding water to the calcium agent in the form of powder prepared by dehydrating, drying and pulverizing the foregoing aqueous suspension of the calcium agent may suffice, but the latter form is preferable from the viewpoint of the strict observance of the Food Additive Standard as well as the hygienic management.

When the calcium agent prepared by the latter process is used, as far as the pH of calcium carbonate employed is concerned, it is preferred, from the viewpoints of preventing a decrease in functions as an additive and enhancing efficiency upon pulverization and classification, to use the calcium carbonate powder having the pH of 11.7 or less at 25°C of an aqueous suspension which is obtained by subjecting 200 cc of an aqueous suspension having the solid matter concentration of 20 % by weight of calcium carbonate powder to supersonic wave-treatment under conditions of 300 W, 20 KHz for 10 minutes. More preferably, the calcium carbonate powder having the pH of 11.5 or less is more preferred to use.

The specific surface area of calcium carbonate used as a material in the present invention measured by a nitrogen adsorption method (BET method) is preferable in the range of from 6 to 60 $m^2$/g. If it is less than 6 $m^2$/g, the stability for a long period of time in liquid foods such as cow's milk sometimes becomes problematic, while if it is more than 60 $m^2$/g, calcium carbonate particles sometimes aggregate so strongly that they are difficult to disperse.

The specific surface area of the calcium phosphate measured by a nitrogen adsorption method (BET method) is preferable in the range of 6 to 90 $m^2$/g. If it is less than 6 $m^2$/g, the stability for a long period of time in liquid foods such as cow's milk sometimes becomes problematic, while if it is more than 90 $m^2$/g, calcium phosphate particles sometimes aggregate so strongly that they are difficult to disperse.

Magnesium phosphate, one of magnesium compounds used in the present invention is one obtained by a chemical synthesis, and prepared, for example, by adding sodium hydrogen carbonate to an aqueous solution of magnesium sulfate and disodium hydrogen phosphate to react them in the weak alkaline state, to prepare an aqueous suspension of magnesium phosphate, and washing and dehydrating the resulting aqueous suspension of magnesium phosphate repeatedly, followed by drying and grinding.

Magnesium carbonate, one of magnesium compounds used in the present invention is heavy magnesium carbonate or light magnesium carbonate which are chemically synthesized, and is prepared, for example, by the method as set forth below:

The method comprises adding an alkali carbonate solution to a soluble aqueous magnesium solution to mix them while heating at 60 to 80 °C, to obtain a precipitate, filtering the precipitate, and repeating the procedure of adding warm water and filtering several times, followed by drying and wet grinding. In order to obtain a finer dispersion, it is preferable to use light magnesium carbonate.

As dolomite, other one of magnesium compounds used in the present invention, natural dolomite and synthetic dolomite having magnesium at 10% by weight or larger can be used. When natural dolomite is used, dolomite is ground using an H mill, a vertical mill, a ball mill or a roll mill, and then used. Synthetic dolomite is obtained, for example, by a hydrothermal reaction of magnesium chloride, calcium chloride and calcium carbonate.

In addition, a specific surface area of the aforementioned magnesium compound used in the present invention as a raw material by a nitrogen absorption method (BET method) is preferably in a range of 1 to 250 $m^2$/g. When a specific surface area is smaller than 1 $m^2$/g, there arises a problem of the long term stability in liquid foods such as cow's milk and the like. On the other hand, when a specific surface area exceeds 250$m^2$/g, since a cohesive force of a magnesium ingredient or a magnesium group becomes extremely strong, its dispersion becomes difficult.

The gum arabic (B) used in the present invention is not specifically limited but since a small amount of alkali metal salts contained in gum arabic gives sometimes an adverse effect to an emulsion system, and when used in usages requiring better dispersibility, a desalted gum arabic removing alkali metal salts by a filtration and purification process is preferred to use.

The amount of gum arabic (B) is 1 to 90 parts by weight based on 100 parts by weight of the water hardly soluble inorganic compound (A). If throat passing impression in eating impression and the like in liquid foods such as cow's milk is taken into consideration, the range of 1.5 to 60 parts by weight is preferable, the range of 3 to 25 parts by weight is more preferable.

If the amount of the gum arabic (B) is less than 1 part by weight, when the composition, even though the weight average particle diameter in a particle size distribution of the water hardly soluble inorganic compound (A) contained in the food additive slurry is adjusted minutely, is added to liquid foods such as portions, cow's milk, juice and yogurt of a drink type, the water hardly soluble inorganic compound (A) is inferior in stability with passage of time, and in the worst case, aggregate and precipitate at the bottom of a container within 24 hours. On the other hand, if it is more than 90 parts by weight, when the food additive composition is added to foods such as cow's milk, juice, yogurt of a drink type and the like, the viscosity of a product increases to degrade eating impression, further, the production of a product having a high concentration becomes difficult as the viscosity of the product rises, thus this being not preferable in an economical aspect, too.

The chelating agent (C) used in the present invention possesses a capability of chelating and catching calcium ion and the like, and, for example, condensed phosphates, malates, succinates, tartarates, glutamates, EDTA salts, gluconates and citrates may be exemplified. These may be used singly or in combination of two or more. From the viewpoint of heat resistance, malates, succinates, tartarates, glutamates, gluconates and citrates are preferred, among all, citrates are more preferred since they rarely affect taste and pH even when added in greater amounts. As the salt, alkali metal salts such as Na, K and the like, ammonium salts and the like may be exemplified. The salt is not specifically limited and includes mono, di and tri.

The amount of the chelating agent (C) is 0.01 to 5 parts by weight based on 100 parts by weight of the water hardly soluble inorganic compound (A), but if the stabilization of a liquid state in liquid foods such as portions is taken into consideration, the range of 0.01 to 3 parts by weight is preferable, the range of 0.05 to 2 parts by weight is more preferable.

If the amount of the chelating agent (C) is less than 0.01 part by weight, when adde to foods such as portions, the stability of a portion solution with a lapse of time deteriorates, and thus the tendency of thickening with a lapse of time is seen and extreme gellation takes place. On the other hand, if it is more than 5 parts by weight, the pH not only tends to become too high, but the flavor tends to deteriorate, that being not preferable.

As the additive (D) used in the present invention, those having a good affinity with the gum arabic (B) in water are preferred to use. As such additive, at least one selected from the below-mentioned group (V) is exemplified, for usages requiring the stability for longer period of time, preferably, at least one selected from the below-mentioned group (W), more preferably, at least one selected from the below-mentioned group (X) are used.

Group (V): emulsifiers, thickening stabilizers, modified starches, soybean polysaccharides, origosaccharides

Group (W): sucrose fatty acid esters having an HLB of not less than 8, glycerol fatty acid esters, sorbitan fatty acid esters, propylene glycol fatty acid esters, modified starches, soybean polysaccharides, propylene glycol alginic acid esters (hereinafter referred to as PGA), tamarind gum, gum ghatti, traganth gum, xanthan gum, pullulan, cassia gum, locust bean gum, arabinogalactan, sclero gum and origosaccharides.

Group (X): sucrose fatty acid esters having an HLB of not less than 8, glycerol fatty acid esters, modified starches, PGA, tamarind gum, gum ghatti, xanthan gum, pullulan, locust bean gum, arabinogalactan, sclero gum and origosaccharides

As the emulsifier used in the present invention, for example, sucrose fatty acid esters having an HLB of not less than 8, polyglycerol fatty acid esters, lecithins, sorbitan fatty acid esters and propylene glycol fatty acid esters may be exemplified, and these may be used singly or in combination of two or more.

Sucrose fatty acid ester used in the present invention is a sucrose fatty acid ester which complies with food additive specification and has an HLB of 8 or higher. Inter alia, a sucrose fatty acid ester having an HLB of 15 or higher is preferable. In a fatty acid composition in a sucrose fatty acid ester, a sucrose fatty acid ester having a ratio of fatty acid of a carbon number of 18 in the fatty acid being 50% by weight or larger is preferable, more preferably 60% by weight or larger, further preferably 65% by weight or larger. When a ratio of fatty acid of a carbon number of 18 in the fatty acid composition in sucrose fatty acid ester is smaller than 50% by weight, there is a tendency that the stability of a water hardly insoluble inorganic compound in foods such as cow's milk and the like becomes deficient, besides, bitterness is exhibited in flavor, thus being not preferable.

As the polyglycerol fatty acid ester, various fatty acid esters such as triglycerol, pentaglycerol, hexaglycerol, decaglycerol and the like, and a self-emulsifying type monoglycerol fatty acid ester and the like may be exemplified. Among those, fatty acid esters of triglycerol and pentaglycerol are preferred to use. These may be used singly or in combination of two or more.

As the thickening stabilizer, for example, welan gum, carageenan, sodium alaginate, guar gum, gellan gum, karaya gum, carboxymethyl cellulose (hereinafter referred to as CMC), PGA, tamarind gum, gum ghatti, tragacanth gum, xanthane gum, pullulan, cassia gum, locust bean gum, carbinogalactan and sclero gum may be exemplified, and these may be used singly or in combination of two or more.

The processed starch use in the present invention is not specifically limited and those chemically or physically treated may be exemplified. More concretely, acid-treated starch, alkali-treated starch, oxidized starch, dextrin, enzyme-treated starch, phosphoric acid-esterified starch, acetic acid-esterified starch, octenyl succinic acid-esterified starch, etherified starch and cross-linked starch may be exemplified, and these may be used singly or in combination of two or more. In order to retain the very excellent stability in drinks which can be stored for a long term, starches obtained by at least one kind of reactions such as oxidation, acid treatment, enzyme treatment, esterification, etherification, cross-linking and the like, that is, starches obtained by one or two or more reactions such as acid-treated starch, oxidized starch, enzyme-denatured dextrin, esterified starch, etherified starch and cross-linked starch are preferable. In particular, octenyl succinic acid esterified starch is preferable.

As the soybean polysaccharide, water soluble polysaccharides may be used, and Soya Five (Trade name of Fuji Oil Co., Ltd.) and the like may be preferably used.

As the oligosaccharide, reducing or non-reducing disaccharides or trisaccharides may be exemplified, more concretely, maltose, cellobiose, gentiobiose, melibiose, lactose, turanose, sophorose, trehalose, isotrehalose, sucrose, isosaccharose, maltotriose may be exemplified. These may be used singly or in combination of two or more.

Next, a food additive slurry composition comprising the above-mentioned water hardly soluble inorganic compound (A), gum arabic (B), chelating agent (C) and water, or a food additive slurry composition comprising the above-mentioned water hardly soluble inorganic compound (A), gum arabic (B), chelating agent (C) additive (D) and water is prepared.

The preparation method is roughly classified into the following three kinds of (E), (F) and (G), but any of them may be used, or a combination thereof may be used.

(E) An aqueous suspension composed of a water hardly soluble inorganic compound (A) and water is subjected to grinding and/or dispersing treatment by a chemical dispersing method, or a physical method using a grinding machine and/or a dispersing machine, followed by treatment by addition of gum arabic (B) and a chelating agent (C), or gum arabic (B), a chelating agent (C) and an additive (D).

(F) An aqueous suspension composed of a water hardly soluble inorganic compound (A), gum arabic (B), and a chelating agent (C), water or a water hardly soluble inorganic compound (A), gum arabic (B), a chelating agent (C), an additive (D) and water is subjected to grinding and/or dispersing treatment by a chemical dispersing method, or a physical method using a grinding machine and/or a dispersing machine.

(G) An aqueous suspension composed of a water hardly soluble inorganic compound (A) and water is subjected to grinding and/or dispersing treatment by a chemical dispersing method, or a physical method using a grinding machine and/or a dispersing machine, gum arabic (B) and a chelating agent (C), or gum arabic (B), a chelating agent (C) and an additive (D) are added, and the resulting mixture is subjected to grinding and/or dispersing treatment by a physical method using a grinding machine and/or a dispersing machine.

In the aforementioned (E), (F) and (G), the indispensable condition for preparing a food additive slurry composition of a water hardly soluble inorganic compound (A), gum arabic (B), a chelating agent (C) and water is that gum arabic (B) is contained in an amount of 1 to 90 parts by weight of the gum arabic (B) and the chelating agent (C) is contained in an amount of 0.01 to 5 parts by weight based on 100 parts by weight of the water hardly soluble inorganic compound (A) having a solubility in water at 20 °C of not more than 0.1 g/100 g of water.

The food additive slurry composition prepared by a water hardly soluble inorganic compound (A), gum arabic (B) and a chelating agent (C) and water raises no problems at al when added to ordinary cow's milk. However, in cases where it is added to a long life cow's milk and portions for coffee, black tea and the like, when a super high temperature sterilization is applied, or in cases where it is added to foods having a long relish period, the heat resistance of gum arabic (B) is somewhat problematic. Thus, the stability with a lapse of time of the water hardly soluble inorganic compound (A) contained in the foods deteriorates to thereby make it difficult to keep the stability for a long period of time.

Accordingly, the preferable conditions for producing a food additive composition for use in foods such as a long life cow's milk and portions for coffee is that based on 100 parts by weight of a water hardly soluble inorganic compound (A), 1 to 90 parts by weight of gum arabic (B), 0.01 to 5 parts by weight of a chelating agent (C), and further, 1 to 90 parts by weight of an additive (D) are not only contained, but also the amount of the above-mentioned gum arabic (B) is adjusted to not less than 20 % by weight, preferably 55 to 99.99 % by weight of the total amount of the components (B) and (D).

If the amounts of the gum arabic (B) and the additive (D) based on the water hardly soluble inorganic compound (A) is less than 1 part by weight, respectively, when the food additive composition is added to foods such as cow's milk, juice, and yogurt of a drink type, the stability with a lapse of time of the water hardly soluble inorganic compound deteriorates, and in a worse case, the water hardly soluble inorganic compound aggregates and precipitates at a bottom of a food container within 24 hours. On the other hand, if those are more than 90 parts by weight, the food additive slurry is added to foods such as cow's milk, juice, and yogurt of a drink type, not only the viscosity of a product is increased and eating impression is not preferable, but also as the viscosity of the product increases, production of a product having a high concentration becomes difficult in handling, and thus production must be carried out at a decreased solid matter concentration, thus being not preferable in an economical aspect.

Moreover, if the amount of the gum arabic (B) occupying in the total amount of the gum arabic (B) and the additive (D) is less than 20 % by weight, the viscosity of a product increases remarkably to result in a deterioration in flavor which is an important factor of foods, and a deterioration in eating impression, and that being not preferable in an economical aspect. On the other hand, the amount of the gum arabic (B) is more than 99.99 % by weight, sufficient effects by addition of the additive (D) are not obtained in some cases.

The calcium ion concentration M (mg/l) preferably complies with the following requirement (a), more preferably, the following requirement (a1), still more preferably, the following requirement (a2), in order to enhance flavor when added to foods.

If the calcium ion concentration (mg/l) is not less than 10, when the food composition is added to portions and the like, the stability of vegetable or animal proteins are liable to be damaged to thereby lead to thickening and, in a worse case, gellation.

(a) $\quad 0 \leqq M < 10$

(a1) $\quad 0.1 \leqq M < 5$

(a2) $\quad 0.1 \leqq M \leqq 2$

M: calcium ion concentration (mg/l) of a food additive composition obtained by adjusting a solid matter concentration of calcium to 10 % by weight after pulverization and/or dispersion.
The calcium ion concentration is calculated according to the following manner:

Apparatus: 10N METER IM-40S manufactured by Toa Denpa Kogyo Co., Ltd.
Preparation of a specimen: A food additive slurry is added with a solvent to adjust a solid matter concentration of the calcium agent to 10 % by weight. To 10 volumes of the adjusted slurry, 1 (one) volume of a calcium ion adjusting agent is added to obtain a specimen for the measurement.
Solvent: Deionized water

Moreover, the weight average particle diameter K (μm) in particle size distribution of a water hardly soluble inorganic compound preferably satisfies the requirement (α) as set forth below, and it more preferably satisfies the requirement (β), still more preferably (γ) in usage in which the storage stability for a fairly long period of time is required:

(α) $0.04 \leqq K \leqq 0.8$

(β) $0.04 \leqq K \leqq 0.5$

(γ) $0.04 \leqq K \leqq 0.3$

If the weight average particle diameter K in particle size distribution of a water hardly soluble inorganic compound contained in the food additive composition is greater than 0.8 μm, the water hardly soluble inorganic compound is easy to precipitate so that the composition can not be used for foods being stored for a long period of time. The adjustment of the weight average particle diameter of a water hardly soluble inorganic compound contained in the food additive slurry composition to 0.8 μm or less may be made by the methods (E), (F) and (G) as mentioned above. For the pulverization and/or dispersion by the physical method, wet-pulverizers such as Dyno-mill, Sand-mill and Cobolmill, emulsifying and dispersing apparatuses such as Nanomizer, Microfluidizer and Homogenizer, supersonic wave disperser and roll mills such as a three-roll mill may be preferably used.
Meanwhile, the weight average particle diameter in particle size distribution of a water hardly soluble inorganic compound contained in the food additive composition in the present invention is measured and calculated according to the following manner:

Apparatus: SA-CP4L manufactured by Shimadzu Corp.
Preparation of a specimen: A food additive slurry composition is added dropwise into a solvent heated to 20 °C to obtain a specimen for the measurement of the particle size distribution.
Solvent: Deionized water
Preliminary dispersing: Supersonic wave dispersion by the use of Z50 disperser (manufactured by Kaijo Co., Ltd.) was conducted for 100 seconds.
Measuring temperature: 20°C ± 1.0 °C

In addition, the content of an alkali metal salt of fatty acid in a food additive slurry composition is preferably 0.1 to 2.0% by weight, more preferably 0.3 to 1.5% by weight, further preferably 0.5 to 1.5% by weight relative to a sucrose fatty acid ester. When the content is smaller than 0.1% by weight, there is a tendency that the solubility of a sucrose fatty acid ester in cold water is suppressed and, as a result, since the stability of a water hardly soluble inorganic compound in foods such as cow' s milk and the like becomes deficient, thus being not preferable. When the content exceeds 2.0% by weight, use as a food additive is not preferable.

In the foregoing way, a food additive slurry composition comprising a water hardly soluble inorganic compound (A), gum arabic (B), a chelating agent (C) and water, or a water hardly soluble inorganic compound (A), gum arabic (B), a chelating agent (C), an additive (D) and water are prepared. Moreover, a food additive powder composition is, as necessary, prepared by drying and pulverizing the slurry composition. The drying machine usable for drying the slurry composition is not specifically limited, but it is desirable to conduct drying in an extremely short time from the standpoint of preventing a change of properties. As such drying machine, a dryer of a liquid drop-spray type such as a spay dryer and a slurry dryer using a ceramic medium in a heated and fluidized, a vacuum dryer are preferably used.

The food additive compositions of the present invention are very excellent in re-dispersibility in water so that they are easily dispersed in water without using a specific disperser or stirring machine.

Accordingly, in preparing foods, for example, a calcium and/or magnesium enriched cow's milk using the food additive composition, it is sufficient to add to cow's milk the food additive composition and to stir the mixture strongly to thus allow the food additive composition to be dispersed in the cow's milk, but it is also possible to add to the cow's milk an aqueous dispersion obtained by preliminarily dispersing in water the food additive composition. In the case of a reducing milk, it is possible to add the food additive composition to butter or butter oil dissolved at 60 °C or so, and to stir the mixture at a high speed, thereafter to add reducing defatted milk or non-fat dry milk for homogenization.

The calcium and/or magnesium agents-enriched cow's milk prepared by the above-mentioned method contains the water hardly soluble inorganic compound removable by a clarifier in much smaller amounts than that containing water hardly soluble inorganic compound prepared by the conventional method. That is, in foods such as cow's milk, yogurt, juice and portions added with the food additive composition, the water hardly soluble inorganic compound are maintained in an extremely stable state. Moreover, the food additive composition of the present invention contain the water hardly soluble inorganic compound in a good dispersion state and thus it is possible to reduce the stirring time at the time of adding them to foods such as cow's milk. As a result, aggregation of the water hardly soluble inorganic compound which can be seen in cases where they are added to butter and stirred for a long time does not take place. The food additive composition of the present invention can be used, besides the above-described usage, for liquid foods such as cream, coffee, black tea, Oolong tea, and alcoholic beverage such as wine and sake for the purpose of enrichment of calcium and/or magnesium. Further, it is also usable for foods and tablets such as cheese, gum, bread, confectionary and noodles.

Moreover, the food additive slurry or powder composition of the present invention may be used conjointly with water-soluble calcium salts such as calcium lactate and calcium chloride, and water-soluble iron salts such as sodium iron citrate and ferrous gluconate.

Hereinafter, the present invention will be explained in more detail by way of examples and comparative examples, but the present invention is in no way limited thereby.

Calcium carbonate powder I:

To 10000 liters of milk of lime having a specific gravity of 1.060 heated to 10°C, a furnace gas having a carbon dioxide gas concentration of 27 % by weight (hereinafter, referred to as "carbon dioxide gas") was supplied at a rate of 25 $m^3$/min to thus cause the carbonation reaction to proceed and an aqueous calcium carbonate suspension having a pH 9.0 at 25°C was thereby obtained.

Next, the aqueous calcium carbonate suspension having the pH 9.0 was stirred at 50 °C for 12 hours and when the suspension reached a pH 11.8 at 25 °C, the suspension was dehydrated by the use of a filter press to thus obtain a dehydrated cake having a calcium carbonate solid matter concentration of 48 % by weight. Then, to the dehydrated cake obtained, water was added again and stirred to thus obtain an aqueous calcium carbonate suspension having the same concentration as that prior to dehydration. The pH of the aqueous calcium carbonate suspension was 11.5. To the aqueous calcium carbonate suspension, carbon dioxide gas was introduced again to thus lower the pH of this suspension to 7.0, thereafter subjected to dehydration by the use of a filter press, drying by the use of a paddle dryer and pulverization by the use of a dry-pulverizer to thereby obtain a calcium carbonate powder A.

The specific surface area of the calcium carbonate powder by a nitrogen adsorption method was measured by the use of a surface area measuring apparatus NOVA 2000 manufactured by QUANTA CHROME Co., Ltd., and the result was 27 $m^2$/g.

Calcium carbonate powder II:

To 10000 liters of milk of lime having a specific gravity of 1.055 heated to 10°C, carbon dioxide gas having a carbon dioxide gas concentration of 27 % by weight was supplied at a rate of 24 $m^3$/min to thus cause the carbonation reaction to proceed and an aqueous calcium carbonate suspension having a pH 9.0 at 25 °C was thereby obtained. Next, the aqueous calcium carbonate suspension having the pH 9.0 was stirred and when the suspension reached a pH 11.8, carbon dioxide gas was introduced again to thus lower the pH of this suspension to 9.5, then the mixture was stirred at 50 °C for 60 hours. Thereafter, carbon dioxide gas was further introduced to lower the pH of the suspension to 7.0 to thereby obtain a calcium carbonate slurry. The calcium carbonate slurry obtained was subjected to dehydration by the use of a filter press, drying by the use of a paddle dryer and pulverization by the use of a dry-pulverizer to thereby obtain a calcium carbonate powder B.

The specific surface area of the calcium carbonate powder by a nitrogen adsorption method was measured by the use of a surface area measuring apparatus NOVA 2000 manufactured by QUANTA CHROME Co., Ltd., and the result was 16 $m^2$/g.

Example 1

A highly concentrated food additive slurry composition using the above-described calcium carbonate powder I was produced by adding, based on 100 parts by weight of a solid matter of calcium carbonate, 5 parts by weight of gum arabic (manufactured Gokyo Sangyo Co., Ltd.), 0.5 part by weight of potassium citrate and water, mixing the mixture with stirring to obtain a food additive slurry having a calcium carbonate solid concentration of 45 % by weight, and wet-pulverizing the slurry by the use of a wet-pulverizer Dyno-mill KD Pilot type (manufactured by WAB Co., Ltd.). The calcium ion concentration M contained in the food additive slurry composition and the weight average particle diameter K in particle size distribution are shown in Table 1. Meanwhile, the viscosity of the food additive slurry composition was sufficiently low and there was no problem with respect to flowability. The gum arabic was dissolved in water in advance then added.

Comparative Example 1

A food additive slurry composition was produced in the same manner as in Example 1, except that the amount added of the potassium citrate was changed as shown in Table 2. The calcium ion concentration M contained in the food additive slurry composition and the weight average particle diameter K in particle size distribution are shown in Table 2. Meanwhile, the viscosity of the food additive slurry composition was sufficiently low and there was no problem with respect to flowability. The gum arabic was dissolved in water in advance then added.

Example 2

An aqueous slurry of tertiary calcium phosphate (manufactured by Taiheikagaku) which had been adjusted to solid matter 40% by weight was wet-ground using Dino mill KD Pilot-type. Using the slurry after grinding, 18 parts by weight of gum arabic and 1.0 part by weight of sodium citrate were added to 100 parts by weight of a solid matter of tertiary magnesium phosphate, and the materials were stirred and mixed to prepare a food additive slurry composition having the tertiary magnesium phosphate solid matter concentration of 35% by weight, which was wet-ground using Dino mill KD Pilot-type to obtain a highly concentrated food additive slurry composition. The calcium ion concentration M contained in the food additive slurry composition and the weight average particle diameter K in particle size distribution are shown in Table 1. Meanwhile, the viscosity of the food additive slurry composition was sufficiently low and there was no problem with respect to flowability. The gum arabic was dissolved in water in advance then added.

Comparative Example 2

A food additive slurry composition was produced in the same manner as in Example 2, except that the amount added of sodium citrate was changed as shown in Table 2. The calcium ion concentration M contained in the food additive slurry composition and the weight average particle diameter K in particle size distribution are shown in Table 2. Meanwhile, the viscosity of the food additive slurry composition was sufficiently low and there was no problem with respect to flowability. The gum arabic was dissolved in water in advance then added.

Example 3

A highly concentrated food additive slurry composition using the above-described calcium carbonate powder II was produced by adding, based on 100 parts by weight of a solid matter of calcium carbonate, 3.5 parts by weight of gum arabic, 0.04 part by weight of potassium succinate, mixing the mixture with stirring to obtain a food additive slurry composition, dispersing the composition by the use of a high pressure homogenizer (manufactured by A.P.

GAULIN Co., Ltd.) under a pressure of 6860 Pa to thus obtain a food additive composition having a calcium carbonate solid matter concentration of 45 % by weight. The calcium ion concentration M contained in the food additive slurry composition and the weight average particle diameter K in particle size distribution are shown in Table 1. Meanwhile, the viscosity of the food additive slurry composition was sufficiently low and there was no problem with respect to flowability. The gum arabic was dissolved in water in advance then added.

Comparative Example 3

A food additive slurry composition was produced in the same manner as in Example 3, except that the potassium succinate was not added. The calcium ion concentration M contained in the food additive slurry composition and the weight average particle diameter K in particle size distribution are shown in Table 2. Meanwhile, the viscosity of the food additive slurry composition was sufficiently low and there was no problem with respect to flowability. The gum arabic was dissolved in water in advance then added.

Example 4

Using magnesium phosphate (manufactured by Taihei Kagaku Sangyo), 30 parts by weight of gum arabic and 0.02 part by weight of sodium malate were added to 100 parts by weight of a solid matter of magnesium phosphate, the materials were stirred and mixed to prepare a food additive slurry composition, which was ultrasonic-dispersed at 300 W and 20 kHz for 10 minutes using an ultrasonic dispersing machine US-300T (manufactured by Nihon Seiki Seisakusho) to obtain a highly concentrated food additive slurry composition having a solid matter concentration of 40 % by weight. The weight average particle diameter K in particle size distribution of the food additive slurry composition is shown in Table 1. Meanwhile, the viscosity of the food additive slurry composition was sufficiently low and there was no problem with respect to flowability. The gum arabic was dissolved in water in advance then added.

Comparative Example 4

A food additive slurry composition was produced in the same manner as in Example 2, except that the amount added of sodium malate was changed as shown in Table 2. The weight average particle diameter K in particle size distribution of the food additive composition is shown in Table 2. Meanwhile, the viscosity of the food additive slurry composition was sufficiently low and there was no problem with respect to flowability.

Examples 5 to 9

Food additive slurry compositions were prepared in the same manner as in Example 1, except that the conditions were changed as shown in Table 1. The calcium ion concentration M contained in the food additive slurry composition and the weight average particle diameter K in particle size distribution are shown in Table 1.
With respect to the food additive slurry compositions of Examples 5 and 8, the calcium carbonate solid matter concentrations were attempted to be enhanced to 45 % by weight as in Example 1, but since at this concentration, the flowability was not found and handling was difficult, the food additive slurry compositions were diluted to 35 % by weight where handling was possible. As the dolomite used in Example 8, a natural dolomite was used. Meanwhile, the gum arabic was dissolved in water in advance then added. Comparative Examples 5, 6
Food additive slurry compositions were prepared in the same manner as in Example 1, except that the conditions were changed as shown in Table 2. The calcium ion concentration M contained in the food additive slurry composition and the weight average particle diameter K in particle size distribution are shown in Table 1.
With respect to the food additive slurry compositions of Comparative Examples 5 and 6, the calcium carbonate solid matter concentrations were attempted to be enhanced to 45 % by weight as in Example 1, but since at this concentration, the flowability was not found and handling was difficult, the food additive slurry compositions were diluted to 20 % by weight where handling was possible. Meanwhile, the gum arabic was dissolved in water in advance then added.

Example 10

A highly concentrated food additive slurry composition using the above-described calcium carbonate powder I was produced by adding, based on 100 parts by weight of a solid matter of calcium carbonate, 5 parts by weight of gum arabic, 0.5 part by weight of potassium citrate, 8 parts by weight of sucrose fatty acid ester (SE) with an HLB 16 and water, mixing the mixture with stirring to obtain a food additive slurry having a calcium carbonate solid matter concentration of 40 % by weight, and wet-pulverizing the slurry by the use of a wet-pulverizer Dyno-mill KD Pilot type (manufactured by WAB Co., Ltd.). The calcium ion concentration M contained in the food additive slurry composition and the weight average particle diameter K in particle size distribution are shown in Table 1. Meanwhile, the viscosity of the highly concentrated food additive slurry composition was sufficiently low and there was no problem with respect to flowability.

Meanwhile, the gum arabic was dissolved in water in advance then added. The sucrose fatty acid ester was dissolved in warm water at 65°C in advance, then cooled to 20°C, and thereafter added.

Comparative Example 7

A food additive slurry composition was produced in the same manner as in Example 10, except that the amount added of the potassium citrate was changed as shown in Table 2. The calcium ion concentration M contained in the food additive slurry composition and the weight average particle diameter K in particle size distribution are shown in Table 2.

Meanwhile, the viscosity of the food additive slurry composition was sufficiently low and there was no problem with respect to flowability.

Example 11

An aqueous slurry of tertiary calcium phosphate which had been adjusted to solid matter 40% by weight was wet-ground using Dino mill KD Pilot-type. Using the slurry after grinding, 18 parts by weight of gum arabic, 1.0 part by weight of sodium citrate, 6 parts by weight of pentaglycerol fatty acid ester (GE) and 3 parts by weight of propylene glycol alginate (PGA) were added to 100 parts by weight of a solid matter of tertiary calcium phosphate, and the materials were stirred and mixed to prepare a food additive slurry composition having the tertiary calcium phosphate solid matter concentration of 25% by weight, which was wet-ground using Dino mill KD Pilot-type to obtain a food additive slurry composition. The calcium ion concentration M contained in the food additive slurry composition and the weight average particle diameter K in particle size distribution are shown in Table 1. Meanwhile, the viscosity of the food additive slurry composition was sufficiently low and there was no problem with respect to flowability.

Meanwhile, the gum arabic was dissolved in water in advance then added. The pentaglycerol fatty acid ester and the propylene glycol alginate were dissolved in warm water at 65 °C, then cooled to 20 °C, and thereafter added.

Comparative Example 8

A food additive slurry compositions was produced in the same manner as in Example 11, except that the amount added of sodium citrate was changed as shown in Table 2. The calcium ion concentration M contained in the food additive slurry composition and the weight average particle diameter K in particle size distribution are shown in Table 2. Meanwhile, the viscosity of the food additive slurry composition was sufficiently low and there was no problem with respect to flowability.

Examples 12, 14, 15, Comparative Example 10

Food additive slurry compositions were prepared in the same manner as in Example 10, except that the conditions were changed as shown in Tables 1 and 2. The calcium ion concentration M contained in the food additive slurry composition and the weight average particle diameter K in particle size distribution are shown in Tables 1 and 2.

With respect to the food additive slurry compositions of Example 14 and Comparative Example 10, the calcium carbonate solid matter concentrations were attempted to be enhanced to 40 % by weight as in Example 10, but since at this concentration, the flowability was not found and handling was difficult, the food additive slurry compositions were diluted to 35 % by weight for Example 14 and to 20 % by weight for Comparative Example 10 where handling was possible.

Meanwhile, the gum arabic, the starch, the pullulan, the trehalose and the soybean polysaccharide were dissolved in water in advance then added.

Example 13

A highly concentrated food additive slurry composition using the calcium carbonate and magnesium carbonate having a mixing ratio 1 : 1 was produced by adding, based on 100 parts by weight of a solid matter of the water hardly soluble inorganic compound, 8 parts by weight of gum arabic, 3.2 parts by weight of potassium citrate, 0.5 part by weight of arabinogalactan and water, mixing the mixture with stirring to obtain a food additive slurry having a calcium carbonate solid matter concentration of 40 % by weight, and wet-pulverizing the slurry by the use of a wet-pulverizer Dyno-mill KD Pilot type. The calcium ion concentration M contained in the food additive slurry composition and the weight average particle diameter K in particle size distribution are shown in Table 1. Meanwhile, the viscosity of the food additive slurry composition was sufficiently low and there was no problem with respect to flowability.

Meanwhile, the gum arabic and the arabinogalactan were dissolved in water in advance then added.

Comparative Example 9

A food additive slurry composition was prepared in the same manner as in Example 13, except that the amount added of the potassium citrate was changed as shown in Table 2. The calcium ion concentration M contained in the food additive slurry composition and the weight average particle diameter K in particle size distribution are shown in Table 2.

With respect to the food additive slurry composition, the calcium carbonate solid matter concentration was attempted to be enhanced to 40 % by weight as in Example 13, but since at this concentration, the flowability was not found and handling was difficult, the food additive slurry composition was diluted to 20 % by weight where handling was possible.

Examples 16 to 30, Comparative Examples 11 to 20

The food additive slurry compositions obtained by Examples 1 to 15 and Comparative Examples 1 to 10 were dried by the use of a spray dryer to thus obtain food additive powder compositions.

Next, the food additive powder compositions obtained by Examples 16 to 30 and Comparative Examples 11 to 20 were added into water stirred at 11000 rpm for 15 minutes by the use of a Homomixer so that re-dispersed suspensions having the same slurry concentrations in solid matter as those prior to being powdered were prepared. The viscosities of the re-dispersed suspensions of the food additive powder compositions were nearly the same as those of the food additive slurry compositions before drying and fluidities were quite satisfactory. The calcium ion concentration M and the weight average particle diameter K in particle size distributions of each of the re-dispersed suspensions are shown in Table 3.

Table 1

| Slurry comp. | Kind of water hardly soluble inorganic comp. (A) | Amount of gum arabic (B) parts by wt. | Kind of chelating agent (C) | Amount of chelating agent (C) parts by wt. | Kind of additive (D) | Amount of additive (D) parts by wt. | Calcium ion conc. M mg/ℓ | Weight average particle diameter μm |
|---|---|---|---|---|---|---|---|---|
| Example 1 | calcium carbonate I | 5 | citric acid 3 K | 0.5 | — | — | 1.0 | 0.22 |
| Example 2 | calcium phosphate | 1 8 | citric acid 3 Na | 1.0 | — | — | 0.6 | 0.24 |
| Example 3 | calcium carbonate II | 3.5 | succinic acid 2 K | 0.04 | — | — | 4.0 | 0.28 |
| Example 4 | magnesium phosphate | 3 0 | malic acid 2 Na | 0.02 | — | — | — | 0.34 |
| Example 5 | magnesium carbonate | 8 5 | tartaric acid 2 K | 2.2 | — | — | — | 0.29 |
| Example 6 | calcium carbonate I | 5 | gluconic acid Na | 0.5 | — | — | 1.8 | 0.28 |
| Example 7 | calcium phosphate | 1.2 | glutamic acid Na | 3.1 | — | — | 0.5 | 0.45 |
| Example 8 | dolomite | 8 8 | EDTA-Na | 0.02 | — | — | 8.3 | 0.55 |
| Example 9 | calcium phosphate | 2.8 | hexametha-phosphoric acid Na | 0.01 | — | — | 9.1 | 0.42 |
| Example 10 | calcium carbonate I | 5 | citric acid 3 K | 0.5 | SE | 8 | 1.2 | 0.19 |
| Example 11 | calcium phosphate | 1 8 | citric acid 3 Na | 1.0 | GB PGA | 6 3 | 1.0 | 0.20 |
| Example 12 | calcium carbonate II | 3.5 | succinic acid 2 K | 0.04 | starch | 1 5 | 5.1 | 0.28 |
| Example 13 | calcium carbonate II magnesium carbonate | 8 | citric acid 3 K | 3.2 | arabino-galactan | 1.7 | 0.9 | 0.31 |
| Example 14 | calcium carbonate I | 7 8 | citric acid 3 Na | 0.02 | pullulan trehalose | 3 1 2 | 12 | 0.20 |
| Example 15 | calcium phosphate | 3 | malic acid 2 K citric acid 3 K | 3.6 1.2 | soybean poly-saccharide | 9 | 0.3 | 0.26 |

EP 1 576 895 A1

13

Table 2

| Slurry comp. | Kind of water hardly soluble inorganic comp. (A) | Amount of gum arabic (B) parts by wt. | Kind of chelating agent (C) | Amount of chelating agent (C) parts by wt. | Kind of additive (D) | Amount of additive (D) parts by wt. | Calcium ion conc. M mg/ℓ | Weight average particle diameter μm |
|---|---|---|---|---|---|---|---|---|
| Comp. Ex. 1 | calcium carbonate I | 5 | citric acid 3 K | 0.008 | — | — | 15 | 0.24 |
| Comp. Ex. 2 | calcium phosphate | 1 8 | citric acid 3 Na | 6.0 | — | — | 0.1 | 0.24 |
| Comp. Ex. 3 | calcium carbonate II | 3.5 | — | — | — | — | 22 | 0.29 |
| Comp. Ex. 4 | magnesium phosphate | 3 0 | malic acid 2 Na | 7 | — | — | — | 0.34 |
| Comp. Ex. 5 | magnesium carbonate | 9 3 | tartaric acid 2 K | 2.2 | — | — | — | 0.26 |
| Comp. Ex. 6 | calcium carbonate I | 0.5 | gluconic acid Na | 0.5 | — | — | 0.8 | 1.50 |
| Comp. Ex. 7 | calcium carbonate I | 5 | citric acid 3 K | 0.008 | SE | 8 | 18 | 0.20 |
| Comp. Ex. 8 | calcium phosphate | 1 8 | citric acid 3 Na | 6.0 | GE PGA | 6 3 | 0.2 | 0.22 |
| Comp. Ex. 9 | calcium carbonate II magnesium carbonate | 0.3 | citric acid 3 K | 3.2 | arabino-galactan | 0.5 | 0.3 | 2.30 |
| Comp. Ex. 10 | calcium carbonate I | 9 8 | citric acid 3 Na | 0.02 | pullulan trehalose | 3 ] 2 | 250 | 0.19 |

EP 1 576 895 A1

Table 3

| Powder comp. | Calcium ion con. M (mg/l) | Weight average particle diameter K (μm) |
|---|---|---|
| Example 16 | 0.9 | 0.23 |
| Example 17 | 0.7 | 0.25 |
| Example 18 | 4.1 | 0.30 |
| Example 19 | — | 0.36 |
| Example 20 | — | 0.29 |
| Example 21 | 1.9 | 0.29 |
| Example 22 | 0.5 | 0.49 |
| Example 23 | 8.5 | 0.58 |
| Example 24 | 9.5 | 0.48 |
| Example 25 | 1.2 | 0.19 |
| Example 26 | 1.1 | 0.20 |
| Example 27 | 5.2 | 0.29 |
| Example 28 | 1.0 | 0.31 |
| Example 29 | 12 | 0.20 |
| Example 30 | 0.5 | 0.26 |
| Comp. Ex. 11 | 16 | 0.26 |
| Comp. Ex. 12 | 0.3 | 0.25 |
| Comp. Ex. 13 | 22 | 0.32 |
| Comp. Ex. 14 | — | 0.35 |
| Comp. Ex. 15 | — | 0.26 |
| Comp. Ex. 16 | 1.2 | 1.53 |
| Comp. Ex. 17 | 19 | 0.20 |
| Comp. Ex. 18 | 0.3 | 0.20 |
| Comp. Ex. 19 | 0.5 | 2.28 |
| Comp. Ex. 20 | 240 | 0.19 |

Abbreviations in Table 1 to 3 indicate the following:

K, Na: Abbreviations of potassium, sodium
EDTA: Ethylenediaminetetraacetic acid
SE: Abbreviation of sucrose fatty acid ester
GE: Abbreviation of pentaglycerol fatty acid ester
PGA: Abbreviation of propylene glycol arginate
Starch: Octenyl succinic acid starch
M: calcium ion concentration (mg/l) of a food additive composition obtained by adjusting a solid matter concentration of calcium to 10 % by weight after pulverization and/or dispersion.
K: Weight average particle diameter (μm) in particle size distribution of a water hardly soluble inorganic compound contained in a food additive composition

**EP 1 576 895 A1**

Next, the food additive slurry compositions and the re-dispersed suspensions of the powder compositions prepared by Examples 1 to 30 and Comparative Examples 1 to 20 were diluted to 1.2 % by weight in solid matter concentration of the water hardly soluble inorganic compound. Each of the diluted suspensions was taken into a 100 ml measuring cylinder and left to stand at 10°C to thus separate a transparent portion caused by precipitates of a mineral agent and a colored portion dispersed by the mineral agent. Changes with time in the interfacial height and the amount of the precipitate were visually inspected and stability of each suspension in water was observed. Scale by ml was read and the results are shown by the following 5-rank evaluation in Tables 4 and 5.

Table 4

| Slurry or powder comp. | Interfacial height | | | Amount of precipitate | | |
|---|---|---|---|---|---|---|
| | After 1 day | After 3 days | After 7 days | After 1 day | After 3 days | After 7 days |
| Example 1 | 5 | 5 | 4 | 5 | 5 | 4 |
| Example 2 | 5 | 5 | 4 | 5 | 5 | 4 |
| Example 3 | 5 | 5 | 4 | 5 | 4 | 4 |
| Example 4 | 5 | 5 | 4 | 5 | 5 | 4 |
| Example 5 | 5 | 5 | 5 | 5 | 5 | 5 |
| Example 6 | 5 | 5 | 4 | 5 | 5 | 4 |
| Example 7 | 4 | 4 | 3 | 4 | 4 | 3 |
| Example 8 | 5 | 5 | 4 | 5 | 5 | 4 |
| Example 9 | 4 | 4 | 3 | 4 | 3 | 3 |
| Example 10 | 5 | 5 | 5 | 5 | 5 | 5 |
| Example 11 | 5 | 5 | 5 | 5 | 5 | 5 |
| Example 12 | 5 | 5 | 5 | 5 | 5 | 5 |
| Example 13 | 5 | 5 | 5 | 5 | 5 | 5 |
| Example 14 | 5 | 5 | 5 | 5 | 5 | 5 |
| Example 15 | 5 | 5 | 5 | 5 | 5 | 5 |
| Example 16 | 5 | 5 | 4 | 5 | 5 | 4 |
| Example 17 | 5 | 5 | 4 | 5 | 5 | 4 |
| Example 18 | 5 | 5 | 4 | 5 | 4 | 4 |
| Example 19 | 5 | 5 | 4 | 5 | 5 | 4 |
| Example 20 | 5 | 5 | 5 | 5 | 5 | 5 |
| Example 21 | 5 | 5 | 4 | 5 | 5 | 4 |
| Example 22 | 4 | 3 | 3 | 4 | 4 | 3 |
| Example 23 | 5 | 5 | 4 | 5 | 5 | 4 |
| Example 24 | 4 | 3 | 3 | 4 | 3 | 3 |
| Example 25 | 5 | 5 | 5 | 5 | 5 | 5 |
| Example 26 | 5 | 5 | 5 | 5 | 5 | 5 |
| Example 27 | 5 | 5 | 5 | 5 | 5 | 5 |
| Example 28 | 5 | 5 | 5 | 5 | 5 | 5 |
| Example 29 | 5 | 5 | 5 | 5 | 5 | 5 |
| Example 30 | 5 | 5 | 5 | 5 | 5 | 5 |

Table 5

| Slurry or powder comp. | Interfacial height | | | Amount of precipitate | | |
|---|---|---|---|---|---|---|
| | After 1 day | After 3 days | After 7 days | After 1 day | After 3 days | After 7 days |
| Comp. Ex. 1 | 5 | 4 | 4 | 5 | 4 | 4 |
| Comp. Ex. 2 | 5 | 5 | 4 | 5 | 5 | 4 |
| Comp. Ex. 3 | 5 | 4 | 3 | 5 | 4 | 3 |
| Comp. Ex. 4 | 5 | 5 | 4 | 5 | 5 | 4 |
| Comp. Ex. 5 | 5 | 5 | 4 | 5 | 5 | 5 |

Table 5   (continued)

| Slurry or powder comp. | Interfacial height | | | Amount of precipitate | | |
|---|---|---|---|---|---|---|
| | After 1 day | After 3 days | After 7 days | After 1 day | After 3 days | After 7 days |
| Comp. Ex. 6 | 2 | 1 | 1 | 2 | 2 | 1 |
| Comp. Ex. 7 | 5 | 4 | 4 | 5 | 4 | 4 |
| Comp. Ex. 8 | 5 | 5 | 4 | 5 | 5 | 4 |
| Comp. Ex. 9 | 2 | 2 | 1 | 2 | 1 | 1 |
| Comp. Ex. 10 | 5 | 4 | 4 | 5 | 4 | 4 |
| Comp. Ex. 11 | 5 | 4 | 3 | 5 | 4 | 3 |
| Comp. Ex. 12 | 5 | 5 | 4 | 5 | 5 | 4 |
| Comp. Ex. 13 | 5 | 4 | 3 | 5 | 4 | 3 |
| Comp. Ex. 14 | 5 | 5 | 4 | 5 | 5 | 4 |
| Comp. Ex. 15 | 5 | 5 | 4 | 5 | 5 | 5 |
| Comp. Ex. 16 | 2 | 1 | 1 | 2 | 2 | 1 |
| Comp. Ex. 17 | 5 | 4 | 4 | 5 | 4 | 4 |
| Comp. Ex. 18 | 5 | 5 | 4 | 5 | 5 | 4 |
| Comp. Ex. 19 | 2 | 1 | 1 | 2 | 1 | 1 |
| Comp. Ex. 20 | 5 | 4 | 4 | 5 | 4 | 4 |

(Interfacial height)

| Interfacial height is not less than 98 ml and not more than 100 ml | 5 |
|---|---|
| Interfacial height is not less than 95 ml and less than 98 ml | 4 |
| Interfacial height is not less than 90 ml and less than 95 ml | 3 |
| Interfacial height is not less than 50 ml and 90 ml | 2 |
| Interfacial height is less than 50 ml | 1 |

(Amount of precipitate)

| Precipitate is rarely observed | 5 |
|---|---|
| Precipitate is slightly observed | 4 |
| Precipitate in about less than 0.5 mm is observed | 3 |
| Precipitate in not less than 0.5 mm and less than 2 mm is observed | 2 |
| Precipitate in not less than 2 mm is observed | 1 |

Example 31

As oils and fats phase, 7.0 Kg of vegetable oils and fats and 0.2 Kg of an emulsifier were mixed and heated to 80°C. As an aqueous phase, an aqueous solution containing 2.5 Kg of the food additive slurry composition in terms of a calcium content prepared by Example 1, 8.8 Kg of sodium caseinate and 0.2 Kg of enzyme-modified egg yolk were added to hot water at 90°C (adjusted to 100 Kg as a final whitener). Next, the above two phases were stirred at 11000 rpm for 5 minutes, then 4 Kg of corn sirup were further added and admixed for 2 minutes. Then, the mixture was homogenized by the use of a homogenizer to thus obtain 100 Kg of a calcium-enriched liquid whitener. The calcium-enriched whitener was taken into several measuring cylinders of 100 ml and they were stored at 5 °C. The whitener was taken out quietly periodically and a change with time in the amount of the precipitate at the bottom of the measuring cylinder was visually inspected. The results are shown by the following 4-rank evaluation in Table 6. Moreover, the state with a lapse of time of the calcium-enriched whitener was visually inspected. The results are shown by the following 4-rank evaluation in Table 6. Furthermore, the sensory test for flavor of the calcium-enriched whitener immediately after production was carried out by 10 men and women and the results are shown by the following 5-rank evaluation in Table 6.

(Amount of precipitate)

| Precipitate is rarely observed | 4 |
|---|---|
| Precipitate is slightly observed | 3 |
| Precipitate in a small amount is observed | 2 |
| Precipitate in a large amount is observed | 1 |

(State)

| Change is rarely observed | 4 |
|---|---|
| Gellation is slightly observed | 3 |
| Gellation is considerably observed | 2 |
| Gellation is completely observed | 1 |

(Flavor)

| Flavor is good | 5 |
|---|---|
| Flavor is slightly concerned about (Incongruity is somewhat felt.) | 4 |
| Flavor is slightly bad (Unpleasantness is somewhat felt.) | 3 |
| Flavor is considerably bad (Unpleasantness is considerably felt.) | 2 |
| Flavor is very bad (Unpleasantness is strongly felt.) | 1 |

Examples 32, 33, 36 to 48, 51 to 60, Comparative Examples 21 to 23, 26 to 33, 36 to 40

Calcium-enriched whiteners were obtained in the same manner as in Example 31, except that the food additive slurry compositions or the food additive powder compositions prepared by Examples 2, 3, 6 to 18, 21 to 30, and Comparative Examples 1 to 3, 6 to 13, 16 to 20 were used and that each calcium content was adjusted to the same content as in Example 31. The inspection of the precipitate and sensory test for flavor with respect to the calcium-enriched whiteners were performed in the same manner as in Example 31. The results are shown in Tables 6 and 7.

Example 34

As oils and fats phase, 7.0 Kg of vegetable oils and fats and 0.2 Kg of an emulsifier were mixed and heated to 80°C. As an aqueous phase, an aqueous solution containing 1.25 Kg of the food additive slurry composition in terms of a magnesium content prepared by Example 4, 8.8 Kg of sodium caseinate and 0.2 Kg of enzyme-modified egg yolk were added to hot water at 90 °C (adjusted to 100 Kg as a final whitener). Next, the above two phases were stirred at 11000 rpm for 5 minutes, then 4 Kg of corn sirup were further added and admixed for 2 minutes. Then, the mixture was homogenized by the use of a homogenizer to thus obtain 100 Kg of a magnesium-enriched liquid whitener. The amount of the precipitate, the state and the flavor of the magnesium-enriched whitener were inspected in the same manner as in Example 31. The results are shown in Table 6.

Examples 35, 49, 50, Comparative Examples 24, 25, 34, 35

Magnesium-enriched whiteners were obtained in the same manner as in Example 34, except that the food additive slurry compositions or the food additive powder compositions prepared by Examples 5, 19, 20, and Comparative Examples 4, 5, 14 and 15 were used and that each magnesium content was adjusted to the same content as in Example 34. The amount of the precipitate, the state and the flavor of each of the magnesium-enriched whiteners were inspected in the same manner as in Example 31. The results are shown in Tables 6 and 7.

Table 6

| | Food additive slurry or powder comp. | Amount of precipitate | | | State | | | Flavor |
|---|---|---|---|---|---|---|---|---|
| | | After 7 days | After 1 month | After 3 month | After 7 days | After 1 month | After 3 month | |
| Example 31 | Product of Ex. 1 | 4 | 4 | 4 | 4 | 4 | 4 | 5 |
| Example 32 | Product of Ex. 2 | 4 | 4 | 4 | 4 | 4 | 4 | 5 |
| Example 33 | Product of Ex. 3 | 4 | 4 | 3 | 4 | 4 | 4 | 4 |
| Example 34 | Product of Ex. 4 | 4 | 3 | 3 | 4 | 3 | 3 | 4 |
| Example 35 | Product of Ex. 5 | 4 | 3 | 3 | 4 | 4 | 3 | 3 |
| Example 36 | Product of Ex. 6 | 4 | 4 | 4 | 4 | 4 | 3 | 5 |
| Example 37 | Product of Ex. 7 | 4 | 3 | 3 | 3 | 3 | 3 | 3 |
| Example 38 | Product of Ex. 8 | 4 | 3 | 3 | 4 | 3 | 2 | 3 |
| Example 39 | Product of Ex. 9 | 3 | 3 | 2 | 3 | 3 | 2 | 4 |
| Example 40 | Product of Ex. 10 | 4 | 4 | 4 | 4 | 4 | 4 | 5 |
| Example 41 | Product of Ex. 11 | 4 | 4 | 4 | 4 | 4 | 4 | 5 |
| Example 42 | Product of Ex. 12 | 4 | 4 | 4 4 | 4 | 3 | 3 | 4 |
| Example 43 | Product of Ex. 13 | 4 | 4 | 4 | 4 | 4 | 4 | 4 |
| Example 44 | Product of Ex. 14 | 4 | 3 | 3 | 3 | 3 | 2 | 3 |
| Example 45 | Product of Ex. 15 | 4 | 4 | 4 | 4 | 4 | 4 | 3 |
| Example 46 | Product of Ex. 16 | 4 | 4 | 4 | 4 | 4 | 4 | 5 |
| Example 47 | Product of Ex. 17 | 4 | 4 | 4 | 4 | 4 | 4 | 5 |
| Example 48 | Product of Ex. 18 | 4 | 4 | 3 | 4 | 4 | 4 | 4 |
| Example 49 | Product of Ex. 19 | 4 | 3 | 3 | 4 | 3 | 3 | 4 |
| Example 50 | Product of Ex. 20 | 4 | 3 | 3 | 4 | 4 | 3 | 3 |
| Example 51 | Product of Ex. 21 | 4 | 4 | 4 | 4 | 4 | 3 | 5 |
| Example 52 | Product of Ex. 22 | 4 | 3 | 3 | 3 | 3 | 3 | 3 |

Table 6   (continued)

| | Food additive slurry or powder comp. | Amount of precipitate | | | State | | | Flavor |
|---|---|---|---|---|---|---|---|---|
| | | After 7 days | After 1 month | After 3 month | After 7 days | After 1 month | After 3 month | |
| Example 53 | Product of Ex. 23 | 4 | 3 | 3 | 4 | 3 | 2 | 3 |
| Example 54 | Product of Ex. 24 | 3 | 3 | 2 | 3 | 3 | 2 | 4 |
| Example 55 | Product of Ex. 25 | 4 | 4 | 4 | 4 | 4 | 4 | 5 |
| Example 56 | Product of Ex. 26 | 4 | 4 | 4 | 4 | 4 | 4 | 5 |
| Example 57 | Product of Ex. 27 | 4 | 4 | 4 | 4 | 3 | 3 | 4 |
| Example 58 | Product of Ex. 28 | 4 | 4 | 4 | 4 | 4 | 4 | 4 |
| Example 59 | Product of Ex. 29 | 4 | 3 | 3 | 3 | 3 | 2 | 3 |
| Example 60 | Product of Ex. 30 | 4 | 4 | 4 | 4 | 4 | 4 | 3 |

Table 7

| | Food additive slurry or powder comp. | Amount of precipitate | | | State | | | Flavor |
|---|---|---|---|---|---|---|---|---|
| | | After 7 days | After 1 month | After 3 month | After 7 days | After 1 month | After 3 month | |
| Comp.Ex. 21 | Product of Comp. Ex.1 | 3 | - | - | 3 | 2 | 1 | 3 |
| Comp.Ex. 22 | Product of Comp. Ex.2 | 4 | 4 | 4 | 4 | 4 | 4 | 1 |
| Comp.Ex. 23 | Product of Comp. Ex.3 | - | - | - | 2 | 1 | 1 | 3 |
| Comp.Ex. 24 | Product of Comp. Ex.4 | 4 | 3 | 3 | 4 | 4 | 3 | 2 |
| Comp.Ex. 25 | Product of Comp. Ex.5 | 4 | 3 | 3 | 4 | 4 | 3 | 1 |
| Comp.Ex. 26 | Product of Comp. Ex.6 | 2 | 1 | 1 | 4 | 4 | 3 | 3 |

Table 7   (continued)

| | Food additive slurry or powder comp. | Amount of precipitate | | | State | | | Flavor |
|---|---|---|---|---|---|---|---|---|
| | | After 7 days | After 1 month | After 3 month | After 7 days | After 1 month | After 3 month | |
| Comp.Ex. 27 | Product of Comp. Ex.7 | 3 | - | - | 3 | 2 | 1 | 3 |
| Comp.Ex. 28 | Product of Comp. Ex.8 | 4 | 4 | 4 | 44 | 4 | 4 | 1 |
| Comp.Ex. 29 | Product of Comp. Ex.9 | 2 | 1 | 1 | 3 | 3 | 2 | 2 |
| Comp.Ex. 30 | Product of Comp. Ex.10 | - | - | - | 1 | 1 | 1 | 1 |
| Comp.Ex. 31 | Product of Comp. Ex.11 | 3 | - | - | 3 | 2 | 1 | 3 |
| Comp.Ex. 32 | Product of Comp. Ex.12 | 4 | 4 | 4 | 4 | 4 | 4 | 1 |
| Comp.Ex. 33 | Product of Comp. Ex.13 | - | - | - | 2 | 1 | 1 | 3 |
| Comp.Ex. 34 | Product of Comp. Ex.14 | 4 | 3 | 3 | 4 | 4 | 3 | 2 |
| Comp.Ex. 35 | Product of Comp. Ex.15 | 4 | 3 | 3 | 4 | 4 | 3 | 1 |
| Comp.Ex. 36 | Product of Comp. Ex.16 | 2 | 1 | 1 | 4 | 4 | 3 | 3 |
| Comp.Ex. 37 | Product of Comp. Ex.17 | 3 | - | - | 3 | 2 | 1 | 3 |
| Comp.Ex. 38 | Product of Comp. Ex.18 | 4 | 4 | 4 | 4 | 4 | 4 | 1 |
| Comp.Ex. 39 | Product of Comp. Ex.19 | 2 | 1 | 1 | 3 | 3 | 2 | 2 |
| Comp.Ex. 40 | Product of Comp. Ex.20 | - | - | - | 1 | 1 | 1 | 1 |
| Note:<br>The expresion "-" in "Amount of precipitate" indicates that the amount of precipitate was not observed because the calcium-enriched whitener or the magnesium-enriched whitener gelled. | | | | | | | | |

Example 61

To 200 g of freeze dried coffee (about 80°C), 2 g of the calcium-enriched whitener (one month after the production) prepared by Example 3 to thus obtain a coffee added with a calcium-enriched whitener. The coffee was taken into several measuring cylinders of 100 ml and the coffee was taken out quietly periodically and a change with time in the amount of the precipitate at the bottom of the measuring cylinder was visually inspected. The results are shown by the following 4-rank evaluation in Table 8. Moreover, the sensory test for flavor of the coffee added with the calcium-enriched whitener was carried out by 10 men and women and the results are shown by the following 5-rank evaluation in Table 8.

(Amount of precipitate)

| | |
|---|---|
| Precipitate is rarely observed | 4 |
| Precipitate is slightly observed | 3 |
| Precipitate in a small amount is observed | 2 |
| Precipitate in a large amount is observed | 1 |

(Flavor)

| | |
|---|---|
| Flavor is good | 5 |
| Flavor is slightly concerned about (Incongruity is somewhat felt.) | 4 |
| Flavor is slightly bad (Unpleasantness is somewhat felt.) | 3 |
| Flavor is considerably bad (Unpleasantness is considerably felt.) | 2 |
| Flavor is very bad (Unpleasantness is strongly felt.) | 1 |

Examples 62 to 90, Comparative Examples 41 to 60

Coffees added with the calcium-enriched whitener or the magnesium-enriched whitener were obtained in the same manner as in Example 61, except that the calcium-enriched whiteners or magnesium-enriched whiteners, on month after production, prepared by Examples 32 to 60 and Comparative Examples 21 to 40. The inspection of the precipitate and sensory test for flavor with respect to these coffees added with the calcium-enriched whiteners or the magnesium-enriched whiteners were performed in the same manner as in Example 61. The results are shown in Table 8 and 9.

Table 8

| | Food additive slurry or powder comp. | Amount of precipitate | | | Flavor |
|---|---|---|---|---|---|
| | | Immediately after preparation | After 15 minutes | After 30 minutes | |
| Example 61 | Product of Ex. 31 | 4 | 4 | 4 | 5 |
| Example 62 | Product of Ex. 32 | 4 | 4 | 4 | 5 |
| Example 63 | Product of Ex. 33 | 4 | 4 | 3 | 4 |
| Example 64 | Product of Ex. 34 | 4 | 4 | 3 | 4 |
| Example 65 | Product of Ex. 35 | 4 | 4 | 4 | 3 |
| Example 66 | Product of Ex. 36 | 4 | 4 | 3 | 4 |
| Example 67 | Product of Ex. 37 | 3 | 3 | 2 | 3 |
| Example 68 | Product of Ex. 38 | 4 | 4 | 3 | 4 |
| Example 69 | Product of Ex. 39 | 3 | 2 | 2 | 3 |
| Example 70 | Product of Ex. 40 | 4 | 4 | 4 | 5 |
| Example 71 | Product of Ex. 41 | 4 | 4 | 4 | 5 |

Table 8   (continued)

| | Food additive slurry or powder comp. | Amount of precipitate | | | Flavor |
|---|---|---|---|---|---|
| | | Immediately after preparation | After 15 minutes | After 30 minutes | |
| Example 72 | Product of Ex. 42 | 4 | 4 | 3 | 4 |
| Example 73 | Product of Ex. 43 | 4 | 4 | 4 | 3 |
| Example 74 | Product of Ex. 44 | 4 | 3 | 3 | 4 |
| Example 75 | Product of Ex. 45 | 4 | 4 | 4 | 3 |
| Example 76 | Product of Ex. 46 | 4 | 4 | 4 | 5 |
| Example 77 | Product of Ex. 47 | 4 | 4 | 4 | 5 |
| Example 78 | Product of Ex. 48 | 4 | 4 | 3 | 4 |
| Example 79 | Product of Ex. 49 | 4 | 4 | 3 | 4 |
| Example 80 | Product of Ex. 50 | 4 | 4 | 4 | 3 |
| Example 81 | Product of Ex. 51 | 4 | 4 | 3 | 4 |
| Example 82 | Product of Ex. 52 | 3 | 3 | 2 | 3 |
| Example 83 | Product of Ex. 53 | 4 | 4 | 3 | 4 |
| Example 84 | Product of Ex. 54 | 3 | 2 | 2 | 3 |
| Example 85 | Product of Ex. 55 | 4 | 4 | 4 | 5 |
| Example 86 | Product of Ex. 56 | 4 | 4 | 4 | 5 |
| Example 87 | Product of Ex. 57 | 4 | 4 | 3 | 4 |
| Example 88 | Product of Ex. 58 | 4 | 4 | 4 | 3 |
| Example 89 | Product of Ex. 59 | 4 | 3 | 3 | 4 |
| Example 90 | Product of Ex. 60 | 4 | 4 | 4 | 3 |

Table 9

| | Food additive slurry or powder comp. | Amount of precipitate | | | Flavor |
|---|---|---|---|---|---|
| | | Immediately after preparation | After 15 minutes | After 30 minutes | |
| Comp.Ex.41 | Product of Comp. Ex.21 | - | - | - | - |
| Comp.Ex.42 | Product of Comp. Ex.22 | 4 | 4 | 3 | 1 |
| Comp.Ex.43 | Product of Comp. Ex.23 | - | - | - | - |
| Comp.Ex.44 | Product of Comp. Ex.24 | 4 | 3 | 3 | 1 |
| Comp.Ex.45 | Product of Comp. Ex.25 | 4 | 3 | 3 | 2 |
| Comp.Ex.46 | Product of Comp. Ex.26 | 2 | 1 | 1 | 3 |
| Comp.Ex.47 | Product of Comp. Ex.27 | - | - | - | - |
| Comp.Ex.48 | Product of Comp. Ex.28 | 4 | 3 | 3 | 1 |
| Comp.Ex.49 | Product of Comp. Ex.29 | 1 | 1 | 1 | 3 |
| Comp.Ex.50 | Product of Comp. Ex.30 | - | - | - | - |

Table 9   (continued)

| | Food additive slurry or powder comp. | Amount of precipitate | | | Flavor |
|---|---|---|---|---|---|
| | | Immediately after preparation | After 15 minutes | After 30 minutes | |
| Comp.Ex.51 | Product of Comp. Ex.31 | - | - | - | - |
| Comp.Ex.52 | Product of Comp. Ex.32 | 4 | 4 | 3 | 1 |
| Comp.Ex.53 | Product of Comp. Ex.33 | - | - | - | - |
| Comp.Ex.54 | Product of Comp. Ex.34 | 4 | 3 | 3 | 1 |
| Comp.Ex.55 | Product of Comp. Ex.35 | 4 | 3 | 3 | 2 |
| Comp.Ex.56 | Product of Comp. Ex.36 | 2 | 1 | 1 | 3 |
| Comp.Ex.57 | Product of Comp. Ex.37 | - | - | - | - |
| Comp.Ex.58 | Product of Comp. Ex.38 | 4 | 3 | 3 | 1 |
| Comp.Ex.59 | Product of Comp. Ex.39 | 1 | 1 | 1 | 3 |
| Comp.Ex.60 | Product of Comp. Ex.40 | - | - | - | - |

Note:
The expresion "-" in "Amount of precipitate" indicates that the amount of precipitate was not observed because the calcium-enriched whitener or the magnesium-enriched whitener gelled to thus make it difficult to add to coffee.

Example 91

35 g in terms of a calcium content of the food additive slurry composition prepared by Example 1 were dispersed in 300 g of butter dissolved at 60 °C. This dispersion was added with stirring into 9.50 Kg of defatted milk and the mixture was sterilized to thus obtain a long life calcium-enriched milk. The long life calcium-enriched milk was taken into several measuring cylinders of 100 ml and the milk was taken out quietly periodically and a change with time in the amount of the precipitate at the bottom of the measuring cylinder was visually inspected. The results were shown by the following 4-rank evaluation in Table 10. Moreover, the sensory test for flavor of the calcium-enriched milk was carried out by 10 men and women and the results as average values were shown by the following 5-rank evaluation in Table 10.

(Amount of precipitate)

| | |
|---|---|
| Precipitate is rarely observed | 4 |
| Precipitate is slightly observed | 3 |
| Precipitate in a small amount is observed | 2 |
| Precipitate in a large amount is observed | 1 |

(Flavor)

| | |
|---|---|
| Flavor is good | 5 |
| Flavor is slightly concerned about (Incongruity is somewhat felt.) | 4 |
| Flavor is slightly bad (Unpleasantness is somewhat felt.) | 3 |
| Flavor is considerably bad (Unpleasantness is considerably felt.) | 2 |
| Flavor is very bad (Unpleasantness is strongly felt.) | 1 |

:

Example 92

18 g in terms of a magnesium content of the food additive slurry composition prepared by Example 4 were dispersed in 300 g of butter dissolved at 60 °C . This dispersion was added with stirring into 9.50 Kg of defatted milk and the mixture was sterilized to thus obtain a long life magnesium-enriched cow's milk. The inspection of the precipitate and sensory test for flavor of the long life magnesium-enriched cow's milk were performed in the same manner as in Example 91. The results are shown in Table 10.

Examples 93 to 95, Comparative Examples 61 to 64

Long life calcium-enriched cow's milks were obtained in the same manner as in Example 91, except that the food additive slurry compositions or the food additive powder compositions prepared by Examples 13, 18, 25, and Comparative Examples 1, 3, 17, 20 were used and that each calcium content was adjusted to the same content as in Example 91. The inspection of the precipitate and sensory test for flavor with respect to the long life calcium-enriched cow's milks were performed in the same manner as in Example 91. The results are shown in Tables 10.

Table 10

| | Food additive slurry or powder camp. | Amount of precipitate | | | Flavor |
|---|---|---|---|---|---|
| | | After 10 days | After 20 days | After 60 days | |
| Example 91 | Product of Ex. 1 | 4 | 3 | 3 | 5 |
| Example 92 | Product of Ex. 4 | 4 | 3 | 2 | 4 |
| Example 93 | Product of Ex. 13 | 4 | 4 | 4 | 4 |
| Example 94 | Product of Ex. 18 | 3 | 2 | 2 | 5 |
| Example 95 | Product of Ex. 25 | 4 | 4 | 4 | 5 |
| Comp.Ex.61 | Product of Comp. Ex.1 | 3 | 3 | 2 | 3 |
| Comp.Ex.62 | Product of Comp. Ex.3 | 3 | 2 | 1 | 3 |
| Comp.Ex.63 | Product of Comp. Ex.17 | 3 | 2 | 2 | 3 |
| Comp.Ex.64 | Product of Comp. Ex.20 | 3 | 2 | 1 | 1 |

Example 96

40 g in terms of a calcium content of the food additive slurry composition prepared by Example 2, 2.5 Kg of a commercially available cow's milk, 130 g of butter, 1.2 kg of defatted milk were added into 5 kg of water and homogenized with stirring. After being sterilized and cooled by a normal method, 200 g of a starter preliminarily prepared were inoculated into the mixture, filled into a 180 cc cup, and fermented at 38 °C for 5 hours to thus obtain a calcium-enriched yogurt.
The sensory test was conducted by 10 men and women and eating impression and flavor were evaluated by the following 4-rank criteria, the average values of which are shown in Table 11.

(Eating impression)

| Texture is not only good, but tongue touch feel is good | 4 |
|---|---|
| Viscosity is somewhat high or texture is somewhat rough, and tongue touch feel is a little harsh | 3 |
| Viscosity is fairly high or texture is fairly rough, and tongue touch feel is fairly harsh | 2 |
| Viscosity is too high or water is released, and tongue touch feel is very harsh | 1 |

(Flavor)

| Flavor is good | 4 |
|---|---|
| Flavor is slightly bad (Unpleasantness is somewhat felt.) | 3 |
| Flavor is considerably bad (Unpleasantness is considerably felt.) | 2 |
| Flavor is very bad (Unpleasantness is strongly felt.) | 1 |

Example 97, Comparative Example 66

20 g in terms of a magnesium content of the food additive slurry compositions prepared by Example 4 and Comparative Example 4, 2.5 Kg of a commercially available cow's milk, 130 g of butter, 1.2 kg of defatted milk were added into 5 kg of water and homogenized with stirring. After being sterilized and cooled by a normal method, 200 g of a starter preliminarily prepared were inoculated into the mixture, filled into a 180 cc cup, and fermented at 38°C for 5 hours to thus obtain magnesium-enriched yogurts.

The inspection of the precipitate and sensory test for flavor of the magnesium-enriched yogurts were performed in the same manner as in Example 91. The results are shown in Table 11.

Examples 98 to 100, Comparative Examples 65, 67

Calcium-enriched yogurts were obtained in the same manner as in Example 96, except that the food additive slurry compositions or the food additive powder compositions prepared by Examples 11, 24, 30, Comparative Examples 2, 18 were used and that each calcium content was adjusted to the same content as in Example 96. The sensory test for eating impression and flavor of these calcium-enriched yogurts was performed in the same manner as in Example 96. The results are shown in Table 11.

Table 11

| | Food additive slurry comp. or re-dispersed suspension of powder comp. | Eating impression | Flavor |
|---|---|---|---|
| Example 96 | Product of Ex. 2 | 4 | 4 |
| Example 97 | Product of Ex. 4 | 4 | 4 |
| Example 98 | Product of Ex. 11 | 4 | 4 |
| Example 99 | Product of Ex. 24 | 3 | 3 |
| Example 100 | Product of Ex. 30 | 4 | 4 |
| Comp.Ex.65 | Product of Comp. Ex.2 | 3 | 2 |
| Comp.Ex.66 | Product of Comp. Ex.4 | 2 | 1 |
| Comp.Ex.67 | Product of Comp. Ex.18 | 3 | 1 |

Industrial Applicability

As mentioned above, the food additive slurry or powder compositions of the present invention are superior in flavor as well as dispersibility in liquid. Moreover, the food compositions prepared by the use of the food additive slurry or powder compositions are very excellent not only in storage stability, but also in flavor.

**Claims**

1. A food additive composition which contains 100 parts by weight of at least one water hardly soluble inorganic compound (A) selected from the group consisting of calcium compounds and magnesium compounds having a solubility in water at 20°C of not more than 0.1 g/100 g of water, 1 to 90 parts by weight of gum arabic (B) and 0.01 to 5 parts by weight of a chelating agent (C).

2. A food additive composition which contains 100 parts by weight of a water hardly soluble inorganic compound (A), 1 to 90 parts by weight of gum arabic (B), 0.01 to 5 parts by weight of a chelating agent (C) and 1 to 90 parts by weight of at least one additive (D) selected from the group consisting of emulsifiers, thickening stabilizers, modified starches, soybean polysaccharides and oligosaccharides, wherein an content of said component (B) is not less than 20 % by weight of the total amount of the components (B) and (D).

3. The food additive composition of claims 1 or 2, wherein the water hardly soluble inorganic compound (A) is at least one selected from the group consisting of calcium carbonate, calcium phosphate, dolomite, magnesium carbonate and magnesium phosphate.

4. The food additive composition of any one of claims 1 to 3, wherein the chelating agent (C) is at least one selected from the group consisting of condensed phosphates, malates, succinates, tartarates, glutamates, EDTA salts, gluconates and citrates.

5. The food additive composition of any one of claims 1 to 3, wherein the chelating agent (C) is at least one selected from the group consisting of malates, succinates, tartarates, glutamates, EDTA salts, gluconates and citrates.

6. The food additive composition of any one of claims 2 to 5, wherein the additive (D) is at least one selected from the group consisting of sucrose fatty acid esters having an HLB of not less than 8, glycerol fatty acid esters, sorbitan fatty acid esters, propylene glycol fatty acid esters, modified starches, soybean polysaccharides, propylene glycol alginic acid esters, tamarind gum, gum ghatti, traganth gum, xanthan gum, pullulan, cassia gum, locust bean gum, arabinogalactan, sclero gum and origosaccharides.

7. The food additive composition of any one of claims 2 to 5, wherein the additive (D) is at least one selected from the group consisting of sucrose fatty acid esters having an HLB of not less than 8, glycerol fatty acid esters, modified starches, propylene glycol alginic acid esters, tamarind gum, gum ghatti, xanthan gum, pullulan, locust bean gum, arabinogalactan, sclero gum and origosaccharides.

8. The food additive composition of any one of claims 1 to 7, wherein a calcium ion concentration (mg/l) satisfies the following requirement (a):

$$\text{(a)}\ 0 \leqq M < 10$$

    M: calcium ion concentration (mg/l) of a food additive composition obtained by adjusting a solid matter concentration of calcium to 10 % by weight after pulverization and/or dispersion.

9. The food additive composition of any one of claims of 1 to 8, wherein a weight average particle diameter K (µm) in particle size distribution of the water hardly soluble inorganic compound contained in the food additive composition is $0.04\ \mu m \leqq K \leqq 0.8\ \mu m$.

10. A food composition containing a food additive composition defined by any one of claims of 1 to 9.

11. The food composition of claim 10, wherein the food is a portion for coffee or black tea.

12. The food composition of claim 11, wherein an ingredient of the portion for coffee or black tea is derived from vegetables.

## INTERNATIONAL SEARCH REPORT

| International application No. |
|---|
| PCT/JP03/09555 |

**A. CLASSIFICATION OF SUBJECT MATTER**
Int.Cl⁷ A23L1/304, A23L2/52, A23C11/00

According to International Patent Classification (IPC) or to both national classification and IPC

**B. FIELDS SEARCHED**

Minimum documentation searched (classification system followed by classification symbols)
Int.Cl⁷ A23L1/304, A23L2/00-A23L2/68, A23C9/13-A23C11/10

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-157214 A  (Taiyo Kagaku Co., Ltd.), 13 June, 2000 (13.06.00), (Family: none) | 1-12 |
| A | JP 2001-333735 A  (Maruo Calcium Co., Ltd.), 04 December, 2001 (04.12.01), (Family: none) | 1-12 |
| A | WO 2000/02462 A1  (SOC PROD NESTLE SA), 20 January, 2000 (20.01.00), & US 6039986 A          & AU 9945128 A & EP 1096864 A1          & JP 2002-520004 A | 1-12 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 November, 2003 (05.11.03) | 18 November, 2003 (18.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)